Europäisches Patentamt

European Patent Office

Office européen des brevets

(11) Publication number: **0 287 205**

**A1**

# (12) EUROPEAN PATENT APPLICATION

(21) Application number: 88301639.6

(22) Date of filing: **25.02.88**

(51) Int. Cl.⁴: **C02F 1/78 , C01B 13/11**

(30) Priority: 25.02.87 GB 8704406
27.08.87 GB 8720232

(43) Date of publication of application:
**19.10.88 Bulletin 88/42**

(84) Designated Contracting States:
**AT BE CH DE ES FR GR IT LI LU NL SE**

(71) Applicant: **FARROW SERVICES LIMITED**
**Seaforth Yawl Hill Lane**
**Uplyme Lyme Regis Dorset, 1DT 73RP(GB)**

(72) Inventor: **Cheeseman, Roger John**
**66 Priory Road**
**Tonbridge Kent TN9 2BL(GB)**
Inventor: **Cheeseman, Kevin Richard**
**49 Slaney Road**
**Staplehurst Kent TN12 0SE(GB)**

(74) Representative: **Prentice, Raymond Roy**
**R.R. Prentice & Co. 34 Tavistock Street**
**London WC2E 7PB(GB)**

(54) **Water treatment apparatus.**

(57) Apparatus for treating and purifying water, primarily for swimming pools, comprises a compressor for compressing ambient air, a cyclic air dryer (11) for drying the compressed air, an ozone generator (13) for receiving the dried air and subjecting said air to an electrical discharge to form ozone, a venturi (7) for directing the ozone into the path of a flow of water, a sensor unit (9) for sensing the ozone dissolved in the water and a control unit (10) for controlling the electrical discharge in the ozone generator (13) in response to the level of ozone sensed by the sensor unit (9).

FIG. 2.

MAINS IN.

EP 0 287 205 A1

# WATER TREATMENT APPARATUS

This invention relates to apparatus for the treatment and purification of water and is particularly concerned with but is not restricted to the treatment and purification of the water used in swimming pools.

The traditional method of pool sterilisation is effected by the addition of a chlorine abundant chemical. While this is a convenient method of sterilisation, it suffers from several disadvantages. In the first place, large amounts of base chemical (usually a sodium salt) are added to the pool water necessitating regular water changes. Secondly, the handling of such chemicals can be problematical and dangerous, the use of bottled chlorine gas being prohibited. These problems can be overcome by the utilisation of ozone gas for sterilisation.

Ozone is a highly desirable and efficient agent for the treatment of water. In quite small concentrations, it rapidly kills all known germs and viruses and many micro-organisms including several against which chlorine is notably less effective. Unlike chlorine, ozone leaves no long-lasting residue or taste. After about thirty minutes, the residual or unused ozone still dissolved in water which is being treated will have reverted to harmless and beneficial oxygen. Ozone is also capable of removing and reducing taints, discolourations and smells of organic and inorganic origin from water and is, moreover, effective in the destruction of many trace organic pollutants. Its effectiveness is little affected by the pH value of the water to be treated.

The present invention aims to provide apparatus for the treatment and purification of water by means of ozone.

According to the invention, there is provided apparatus for treating and purifying water which comprises a compressor for compressing ambient air, means for drying the compressed air, an ozone generator for receiving the dried air and subjecting said air to an electrical discharge to form ozone, means for directing said ozone into the path of a flow of water, means for sensing the ozone dissolved in said water and means for controlling the electrical discharge in said ozone generator in response to the level of ozone sensed by the sensing means.

Preferably, further sensor means are provided for sensing the relative humidity of the compressed air after drying and control means are provided for controlling the operation of the drying means in response to signals received from the drying means.

The drying means may take the form of a cyclic air dryer which comprises a pair of dryer columns connected to the output from the compressor by valve means arranged, in a first position, to allow the passage of air from the compressor to one dryer column while preventing the flow of air to the other dryer column and, in a second position, to allow the passage of air from the compressor to the said other dryer column while preventing the flow of air to the said one dryer column and means for directing compressed air through the said other dryer column in a reverse direction when the valve means are in the first position and through the said one dryer column in a reverse direction when the valve means are in the second position whereby the dryer columns are alternately operative and regenerated during operation of the apparatus.

The ozone generator preferably comprises a first plate of electrically insulating material, a central plate of electrically conductive material and a second plate of electrically insulating material, the electrically conductive plate being sandwiched between said insulating plates with spacers being located between adjacent plates and means being provided for passing a flow of air over the surface of at least one of the plates and further means for subjecting said air flow to electrical discharge to form ozone.

The first plate of electrically insulating material is desirably supported on a base plate in which at least one gas inlet and at least one gas outlet are provided. The electric discharge is preferably arranged to occur between said electrically conductive plate(s) and the base plate.

According to a preferred embodiment of the invention, the apparatus is designed to treat the water of a swimming pool or the like and includes a pump for recirculating water from the swimming pool through the ozone directing means.

The invention will now be further described, by way of example, with reference to the drawings, in which:-

Fig. 1 is a schematic block diagram showing a water treatment apparatus according to the invention installed in a recirculating water system for a swimming pool;

Fig. 2 is a schematic diagram of one embodiment of a water treatment apparatus according to the invention;

Fig. 3 is a diagram of a cyclic air dryer forming part of the apparatus shown in Fig. 2;

Fig. 4 is an exploded perspective view of one embodiment of an ozone generator for use in the water treatment apparatus according to the invention;

Fig. 5 is a plan view of a base plate for the ozone generator shown in Fig. 4;

Fig. 6 is a section taken on the line VI-VI in Fig. 5 in the direction of the arrows;

Fig. 7 is a circuit diagram of the electric circuit of the ozone generator shown in Figs. 4 to 7;

Fig. 8 is a vertical section through a reaction vessel forming part of the water treatment apparatus according to the invention;

Fig. 9 is a block circuit diagram showing a control system for the apparatus according to the invention; and

Fig. 10 is a circuit diagram showing a modified form of control system for the apparatus according to the invention.

In the drawings, like parts are denoted by like reference numerals.

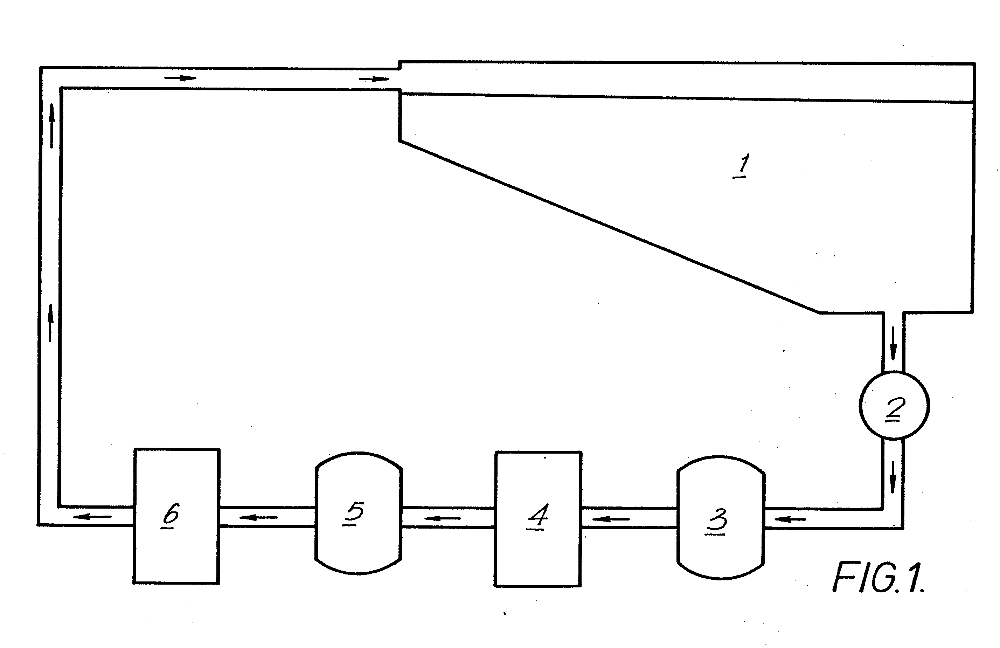

Reference will first be made to Fig. 1 of the drawings in which a swimming pool 1 is provided with an outlet leading to a recirculating pump 2 which is arranged, in operation, to pump water from the swimming pool 1 through a filter 3 to a water treatment apparatus 4 according to the invention. After passing through the treatment apparatus 4, the treated water may, if desired, be passed through a reaction vessel 5 and a chlorine/pH correction unit 6 before being returned to the swimming pool 1. The use of the unit 6 is optional and this unit may be dispensed with altogether if desired. However, purified water leaving the water treatment apparatus 4 can be recontaminated while it remains in the pool and before it is recycled through the apparatus for retreatment. The inclusion of the unit 6 will provide the ability to control the addition of chemical sterilent in order to maintain the purity of the water in the pool but the amount of chemicals needed for this will be only a fraction of the chemicals needed if the water treatment apparatus according to the invention is not utilised.

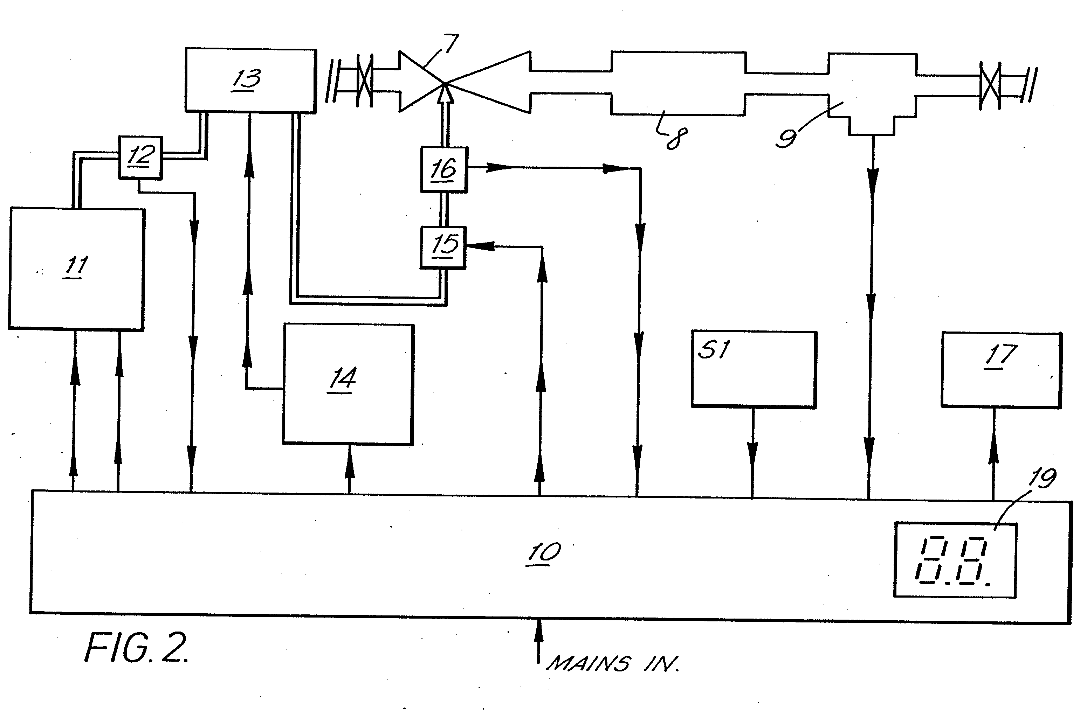

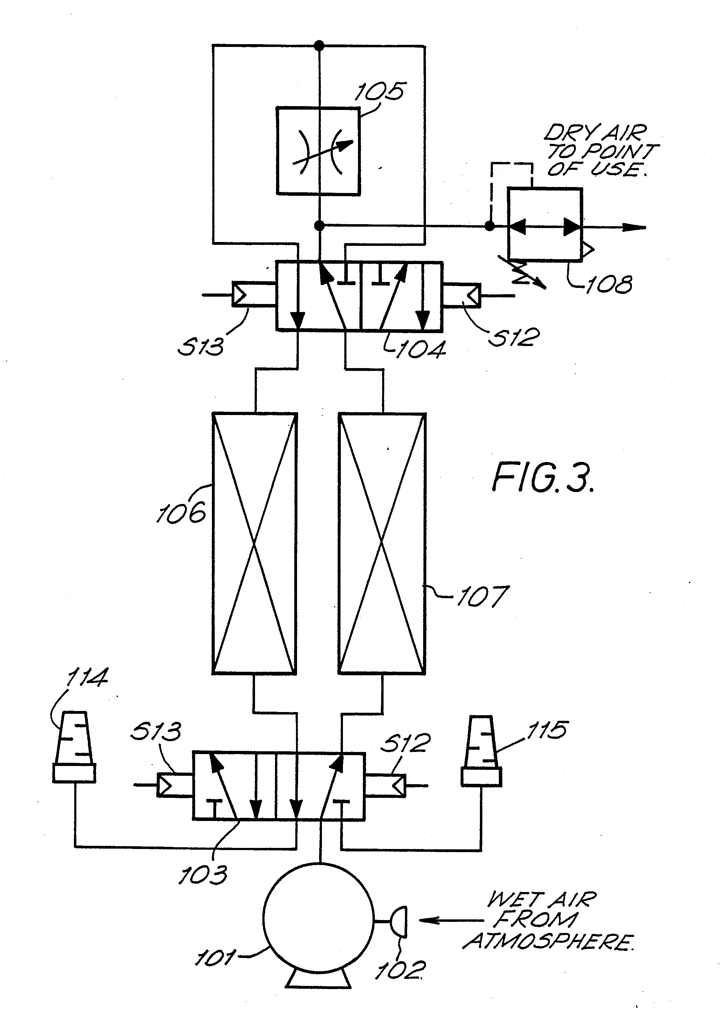

Turning now to Fig. 2, the water treatment apparatus comprises a cyclic air dryer 11 which is arranged to deliver dry air via a dew point sensor 12 to a discharge tube 13. The cyclic air dryer is shown in Fig. 3 and comprises an air compressor 101 which draws in atmospheric air through a filter 102 and compresses the air to 3 atmospheres (44 psi). The compressed air is delivered to a two way solenoid valve 103 which, in one position, is arranged to allow the compressed air to pass to a first dryer column 106 and, in a second position, is arranged to allow the compressed air to pass to a second dryer column 107. The valve 103 is shown in the second position in Fig. 3 and compressed air from the compressor is dried in the dryer column 107. After passing through the dryer column 107, the dried air passes through a second solenoid valve 104 and is then divided into two branches, a first branch leading to a restrictor 105 and a second branch leading to a regulator 108. A tapping from the air line downstream of the regulator 108 leads to the dew point sensor 12 (not shown in Fig. 3).

From the restrictor 105, the air from the first branch is led back through the solenoid valve 104 and is fed to the dryer column 106 and passes through this column in a reverse direction to the flow of air through the dryer column 107. The dried air flow is therefore effective to remove moisture from the column 106 and to regenerate drying chemicals, such as activated alumina or silica gel, contained therein. After passing through the dryer column 106, the now wet air passes through the first solenoid valve 103 and is vented to atmosphere via a muffler 114.

The dried air supplied to the discharge tube 13 should have a dew point of -60°C. Naturally, during operation, the efficiency of the dryer column 107 will diminish as the drying chemicals become saturated and when the dew point temperature, sensed by the sensor 12, begins to rise, the solenoid valves 103 and 104 are switched to the first position (not shown in Fig. 3) when air from the compressor 101 is supplied via the valve 103 direct to the dryer column 106. Dried air from the dryer column 106 passes through the solenoid valve 104 to the restrictor 105 and regulator 108. The discharge tube 13 will now be supplied with dried air from the dryer column 106 while dried air will pass through the dryer column 107 in the reverse direction to regenerate the saturated chemicals in this column. After passing through the dryer column 107, the now wet air passes through the solenoid valve 103, which is in its alternative position from that shown in Fig. 3, so that the air can be vented to atmosphere via a muffler 115.

Repeated switching of the solenoid valves 103 and 104 between their two positions ensures a continuous supply of dried air to the discharge tube 13 and permits continuous operation of the treatment apparatus.

In order to produce ozone in the discharge tube 13, air is made to pass between the plates of a capacitor which is connected to a source of high voltage. The air acts as a dielectric and the stress produced in it forcibly separates the molecular bonds of the oxygen, some of which form nascent oxygen ($O_2 \rightarrow 2O$). Nascent oxygen has a life of only a few microseconds and it rapidly recombines with itself to form ozone:

$$(3O \rightarrow O_3 : O_2 + O_2 \rightarrow O_3 + O)$$

Some may also recombine with itself to form oxygen and in practice it is not possible to convert all of the oxygen into ozone ($O_3$).

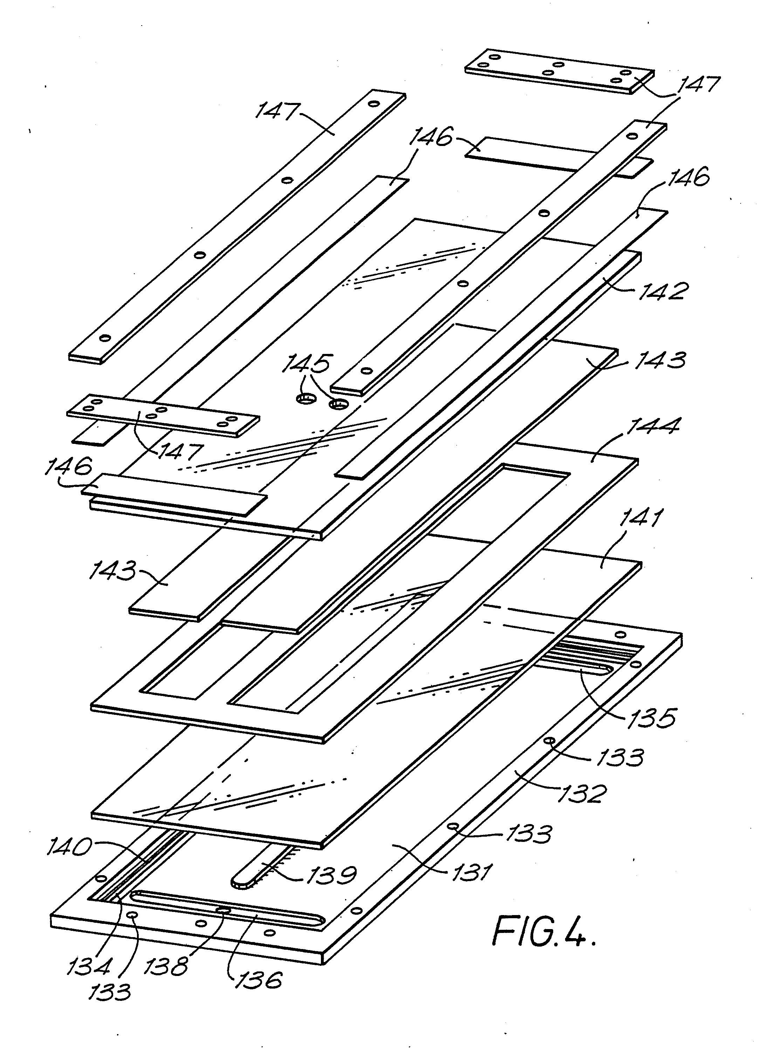

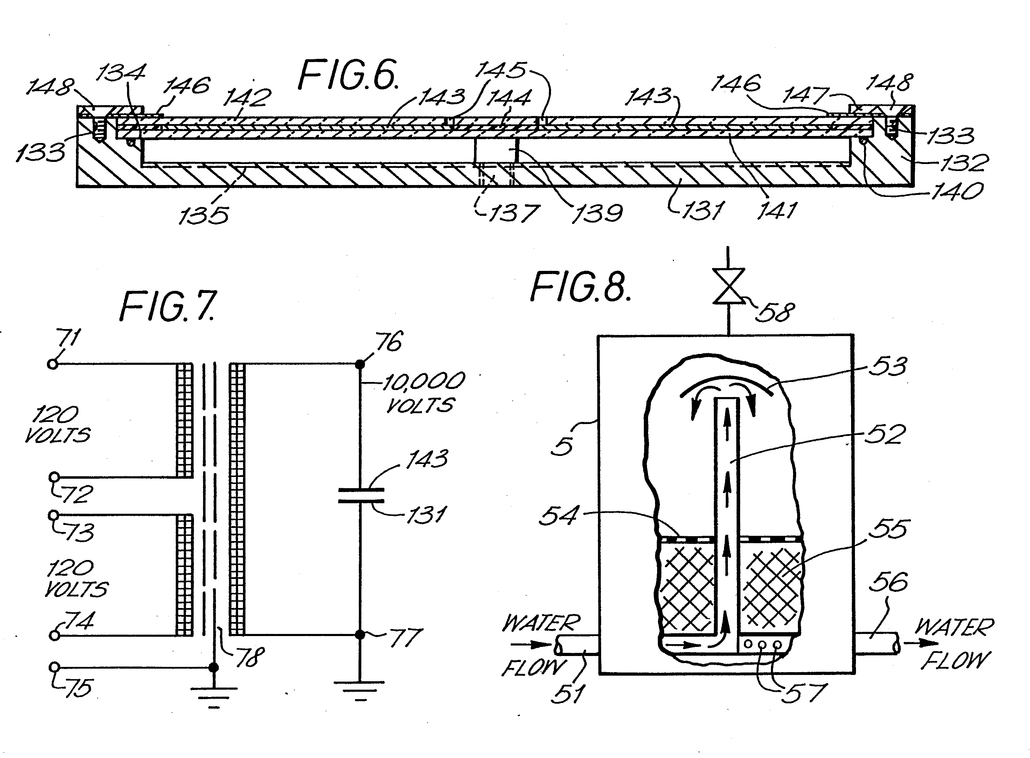

As shown in Figs. 4 to 6 of the drawings, the ozone generator of the water treatment apparatus according to the invention comprises a substantially rectangular base plate 131 made of aluminium, aluminium alloy or other suitable electrically conductive material. The plate 131 has a raised peripheral edge 132, which may be formed integrally with the plate or may take the form of separate strips secured thereto, and a stepped region 134 provided in the inner side of the peripheral edge 132 whereby a well is formed in the central area of the base plate 131. Adjacent each of its shorter ends, the plate is provided with a trough 135, 136 and at least one respective bore 137, 138 extends through the base plate 131 into the associated trough 135, 136. Extending substantially parallel to the longer sides of the base plate from adjacent each trough 135, 136 substantially to the centre of the plate are a pair of support lands 139.

A first glass plate 141 is laid on the base plate 131 and is of such a size that its edges rest on the stepped region 134 of the base plate, an O ring 140 being located in a groove in the stepped region 134 on which the edges of the glass plate 141 seat to provide a seal. A pair of brass plates 143 are laid on the glass plate 141 and are surrounded by a spacer plate 144 of plastics or other electrically insulating material. A second glass plate 142 is laid on the brass plates 143 and spacer plate 144 and the dimensions of the plates 142 and 144 are such that they overlie the glass plate 141 within the stepped region 134 of the peripheral edge 132 of the base plate 131. Although the drawings show the two glass plates 141 and 142 as being of substantially equal thickness, the plate 142 is preferably about 6mm thick and the plate 141 is preferably only about 2.8mm thick. The combined thickness of the glass plates 141 and 142 and the spacer plate 144 is preferably such that the upper surface of the second glass plate is substantially flush with the upper surface of the peripheral edge 132 of the base plate 131. The thickness of the two brass plates 143 should be substantially equal to the thickness of the spacer plate 144. The latter may, however, be omitted if desired.

The upper glass plate 142 is provided with a pair of bores 145 through which lead electrical connections (not shown) to the brass plates 143. Shims 146 of paper or like material are laid on the glass plate 142 and clamping strips 147 are laid over the shims 146 and secured to the peripheral edge 132 by means of screws 148 which engage in screw-threaded bores 133 provided at spaced intervals in said peripheral edge 132.

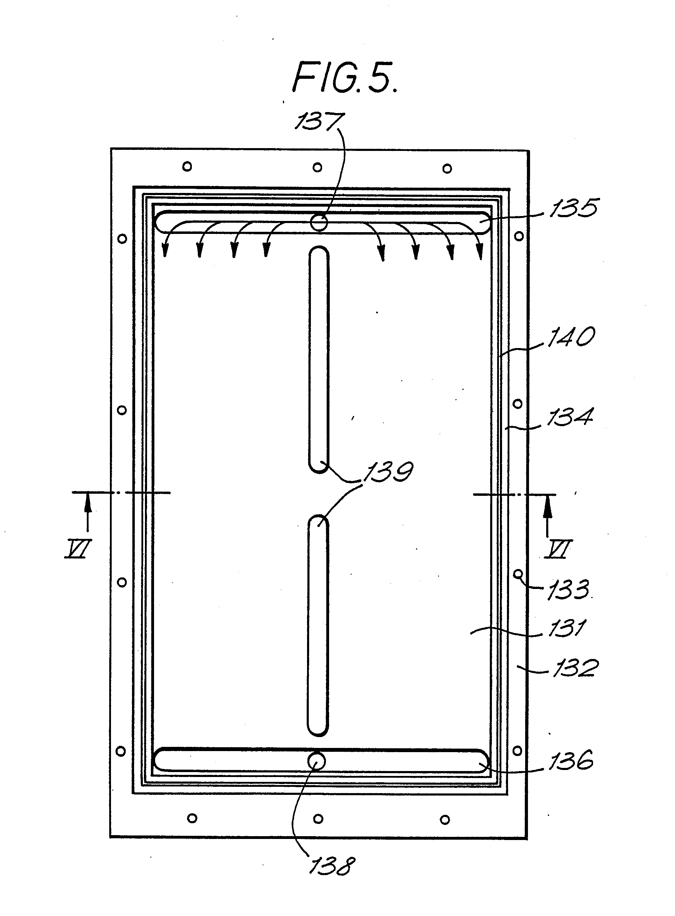

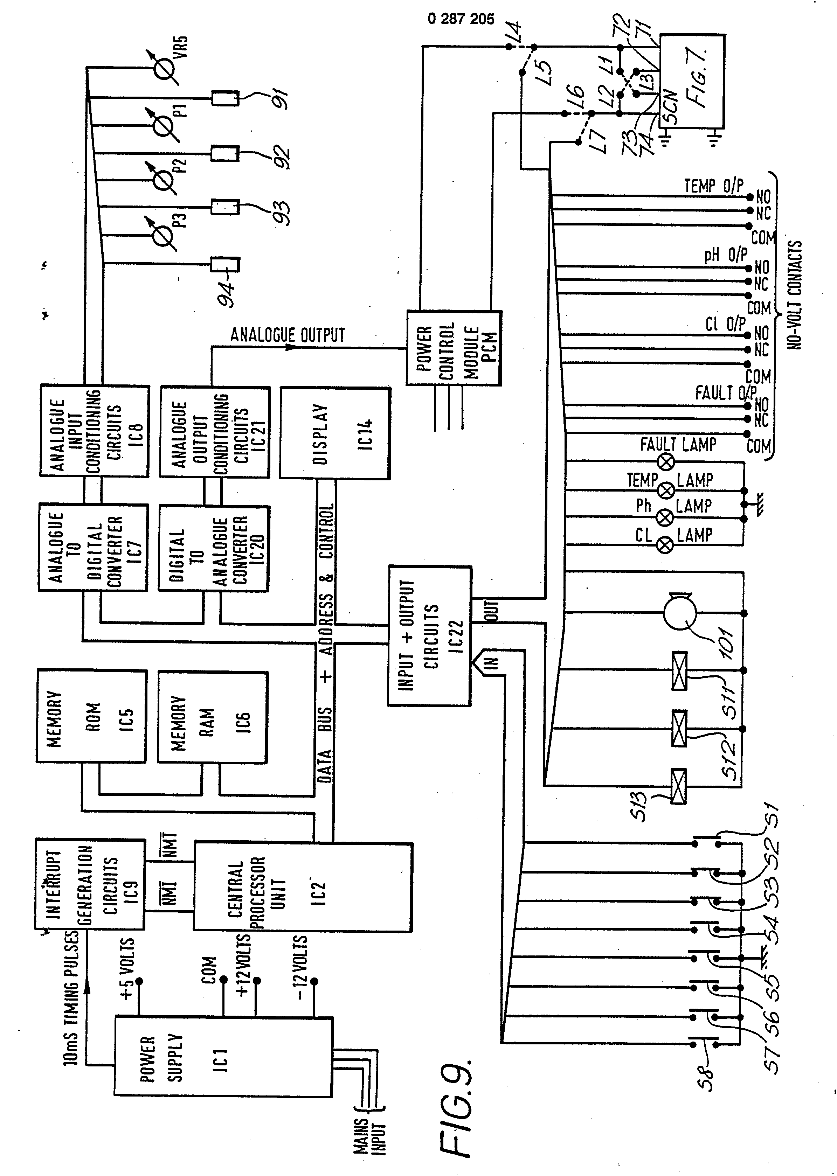

Dried compressed air from the cyclic air dryer 11, after passing through the dew point sensor 12 is conveyed by a pressure line to the inlet bore 137 and passes along the trough 135 and enters the space between the base plate 131 and the first glass plate 141 as indicated by the flow arrows in Fig. 5. During its passage down the base plate to the trough 136 the air is subjected to a high voltage discharge which is achieved by connecting one terminal 76 of the secondary winding of a transformer (see Fig. 7) to the brass plates 143 and the other terminal 77 of the secondary winding of the transformer to the base plate 131. The terminals 71, 72 and 73, 74 of two primary windings of the transformer are connected to the electric mains via control devices to be hereinafter described and a further terminal 75 of the transformer is connected to a screen 78. The purpose of the screen 78 is to shield the primary and secondary windings of the transformer so that, in the event of an insulation breakdown in the windings, the resulting short circuit will be conducted to earth via the screen. At the same time, a fuse or circuit breaker connected to the terminal 75 will be effective to cut off the supply of electric current to the primary windings.

If the primary windings of the transformer are to be operated at 120 volts, their terminals 71, 72 and 73, 74 are connected in parallel but if the primary windings are to be operated at 240 volts, they are connected in series by connecting together the terminals 72 and 73. The brass plates 143 form the anode and the base plate 131 forms the cathode of the discharge tube and air passing over the plate 131 is typically subjected to a voltage discharge of some 10,000 volts. The air from the air dryer is typically supplied at the rate of 1250 litres per hour to the inlet of the ozone generator and the mixture of gases issuing through the outlet bore 138 from the trough 136 contains about half per cent by weight of ozone at this flow rate.

After passing out of the outlet bore 138, the air containing ozone is passed through a shut-off valve 15 and a vacuum sensor unit 16 to a venturi 7 where it is mixed with water from the swimming pool which is being circulated by the pump 2 (see Fig. 2). The venturi 7 is followed by a static mixer 8 at which further mixing takes place after which the treated water is passed through a sensor unit 9. The water is then returned to the swimming pool 1 after passing through the reaction vessel 5 and the unit 6 (if fitted).

As shown in Fig. 8, the reaction vessel 5 has an inlet 51 adjacent to its base to which is connected a tube 52 extending vertically upwards within the vessel 5. Water flowing out of the end of tube 52 impinges on a baffle 53 and then falls through a perforated baffle plate 54 and a filter bed of activated carbon 55 to the bottom of the vessel. An outlet pipe 56 is provided with bores 57 to allow the water to enter said pipe and to pass out of the vessel 5. This vessel thus delays the flow of water for approximately two minutes to allow the ozone to take effect. The carbon filter removes any remaining ozone before the water is returned via the outlet pipe 56 to the pool. The vessel 5 is further provided with an air release valve 58 to vent spent gases.

The water treatment apparatus according to the invention is provided with means for monitoring and controlling its operation. As shown in Fig. 2, these means comprise an electronic micro-controller 10 which is connected to the cyclic air dryer 11 in order to control operation of the solenoid valves 103 and 104 in response to signals received from the dew point sensor 12 to which it is also connected. The micro-controller 10 is also connected to the discharge tube 13 via an inverter or transformer 14 in order to provide the high voltage discharge above described. The suction effect in the venturi 7 is sensed by the vacuum sensor unit 16 which is connected to the micro-controller 10 and the shut-off valve 15, which is connected to the micro-controller 10, is arranged to control the supply of ozone-containing air from the discharge tube 13 to the sensor 16 and hence to the venturi 7 in response to signals received by the micro-controller from the sensor 16. Further control of the air dryer 11, the discharge tube 13 and the valve 15 is effected by the micro-controller 10 in response to signals from the sensor unit 9 to which the micro-controller is also connected. An alarm 17 is also connected to the micro-controller and is arranged to be activated in the event of an emergency or a dangerous condition developing in the water treatment apparatus.

Finally, a mode switch S1 is connected to the micro-controller 10 in order that the treatment apparatus may be set to operate in various different modes. A visual display window 19 may be provided on the casing of the micro-controller 10 if desired in order to display the residual sterilent level sensed by the sensor unit 9.

The circuit for controlling the micro-controller 10 is illustrated in block form in Fig. 9 and comprises a power supply unit IC1 which is adapted to be connected to the electric mains and which includes a 30 watt toroidal transformer and IC regulators to supply output voltages of +5 volts, +12 volts and -12 volts as well as a timing pulse which is connected to an integrated circuit unit IC9 which includes interrupt generation circuits. The unit IC9 is supplied with timing pulses from the unit IC1 at mains frequency. The unit IC9 squares these pulses and supplies them via a transistor to a central processor unit IC2 which provides a 10 milli-second timing pulse which is used to drive a clock circuit and display output timing.

The central processor unit IC2 is connected to a memory IC5 which in turn is connected to a memory IC6. The memory IC6 is connected to an analogue to digital converter IC7. This converter is arranged to receive signals from a sensor 91 for sensing the ozone remaining in the water after leaving the static mixer 8, a temperature sensor 92, a pH sensor 93 and a chlorine sensor 94 via a peripheral interface adaptor IC8. The sensors 91, 92, 93 and 94 are provided in the sensor unit 9 (Fig. 2) and each sensor may be preset to a desired predetermined level by means of a respective potentiometer VR5, P1, P2 and P3. The converter IC7 is connected to a digital to analogue converter IC20 which converts digital information into analogue signals and is in turn connected to a conditioning circuit unit IC21.

The central processor unit IC2 is also provided with an 81 second timing signal which is used to time the changeover period of the air dryer 11, the output from the unit IC2 carrying this signal being connected to a unit IC22 which has input and output circuits. Inputs to the unit IC22 are connected to the mode switch S1, a vacuum switch S2 for controlling operation of the air compressor 101, an overload switch S3, a dewpoint switch S4, a temperature switch S5, a pH switch S6 for controlling operation of the pH unit 6, a chlorine switch S7 and a spare switch S8. Outputs from the unit IC22 are connected to the air compressor 101, a solenoid S1 for controlling operation of the shut-off valve 15 and solenoids S12 and S13 for controlling operation of the solenoid valves 103 and 104 (see Fig. 3). Further outputs from the unit IC22 are connected to no volt contacts of temperature (TEMP O/P), pH (pH O/P), chlorine (Cl O/P) and fault (FAULT O/P) monitors, to lamps L11, L12, L13 and L14 and to switch contacts L5 and L7. The lamp L11 is a fault lamp for indicating the presence of a fault in the operating system while the lamps L12, L13 and L14 are, respectively, temperature, pH and chlorine lamps for indicating that the temperature, pH value and chlorine level are either within or outside of predetermined limits set by the potentiometers P1, P2 and P3 respectively. The converter IC20 and unit IC22 are also connected to a display unit IC14 which has means for displaying visual information relating to the dryer 11, the dew point sensor 12, the vacuum sensor 16, the mode switch 18, the ozone residual sensor 91, the temperature sensor 92, the pH sensor 93 and the chlorine sensor 94.

As further shown in Fig. 9, the terminals 72 and 73 of the primary windings of the transformer can be connected together by a switch L3 to give series operation at 240 volts or terminal 72 can be connected to a contact L2 and terminal 73 can be connected to a contact L1 to give parallel operation at 120 volts. The terminal 71 and the contact L1 can be connected to the switch contact L5 or to a contact L4 while the terminal 74 and the contact L2 can be connected to the switch contact L7 or to a contact L6. The contacts L4 and L6 are connected to a power control module PCM which is adapted to be connected to the electric mains and to an analogue output from the conditioning unit IC21. If the terminal 71 is connected to the contact L4, the terminal 74 must be connected to the contact L6. On the other hand, if the terminal 71 is connected to the contact L5, the terminal 74 must be connected to the contact L7.

The apparatus may be operated in discontinuous or continuous mode. In discontinuous mode, the terminals 71 and 74 are connected, respectively, to the contacts L5 and L7. The ozone residual sensor 91 generates a voltage which is proportional to the ozone level of the water. The maximum residual level required to sterilise the water is set by the potentiometer VR5. When the level falls below a predetermined level, the discharge transformer is turned on to generate high voltage in the discharge tube 13. The ozone level will then rise until it reaches the level set by the potentiometer VR5. When this occurs, a signal from the sensor 91 will be effective to turn off the discharge tube so that the ozone level will again fall until it reaches the predetermined lower level when the cycle is repeated. The ozone level is continuously monitored by means of the sensor 91 and, while the apparatus is in operation, the solenoids S12 and S13 are operated at regular intervals to actuate the solenoid valves 103 and 104 to ensure that the dryer columns 106 and 107 are switched regularly as required to ensure a continuous supply of dried air.

In the event of main pump failure, the discharge tube is automatically turned off, the shuft off valve 15 is closed by the solenoid S11 and the fault lamp 11 will indicate a fault condition. If the main pump should recover and restart, the treatment apparatus will restart and continue as before.

If the apparatus is to be operated in continuous mode, the terminals 71 and 74 are connected, respectively, to the contacts L4 and L6. The ozone level is sensed by the ozone sensor 91 as before but in this case the transformer is controlled by the power control module which receives an analogue signal from the unit IC21. This signal controls the power control module which supplies a voltage to the transformer which is proportional to the analogue signal received from the unit IC21. The discharge voltage of the discharge tube 13 can therefore be controlled so that the ozone level can be continuously maintained between pre-set upper and lower levels.

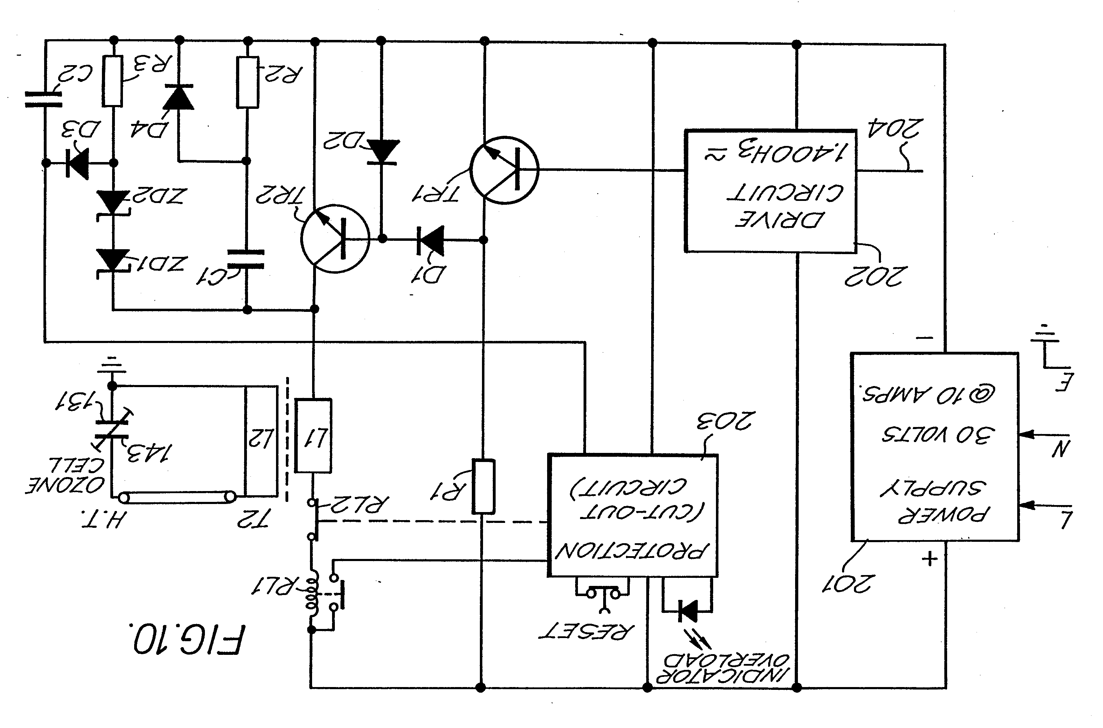

The power control module shown in Fig. 9 and the transformer shown in Fig. 7 may, if desired, be replaced by the circuit shown in Fig. 10 which comprises a power supply unit 201 which supplies 30 volts at 10 amps or 300 watts power to a drive circuit 202 and a protection (cut-out) circuit 203 which monitors both current consumption and open circuit load. The drive circuit 202 is connected by a lead 204 to an output from the unit IC22 (see Fig. 9).

The drive circuit is further arranged to produce a square wave switching pulse to drive a pre-amplifier transistor TR1 which amplifies the pulse in order to drive a second transistor TR2 which serves as the main switch of the circuit. The collector of the second transistor TR2 is connected to the primary L1 of a transformer T2 and this transistor is effective to switch the current through the output transformer at a frequency of approximately 1428Hz. The transformer T2 is arranged to step up the voltage of 30 volts to 6400 volts which is then applied to the ozone cell.

A capacitor C1, resistor R2 and diode D4 are provided to protect the transistor TR2 from over voltages while zener diodes ZD1, ZD2, a resistor R3, diode D3 and capacitor C2 detect an open circuit condition and shut down the circuit. The protection circuit 203 is provided with an overload indicator 205 and a reset switch 206.

The water treatment apparatus according to the invention provides a unit which can clean and sterilise the water of a swimming pool without the conventional use of chemicals. The apparatus is safe to use and requires little user involvement and maintenance. It can readily be installed in a standard swimming pool plant and is compatible with all types of swimming pool systems. The apparatus is economical to run and provides a simple display of units with functional levels. The consumption of a typical apparatus according to the invention is as follows:-

```
Compressor                    -   420 watts
Drive Circuit                 -   300 watts
Other Electronic Controls     -    60 watts
Approx. total                 -   780 watts
```

Thus, consumption is 0.78 Kwh which is equal to 131.04 Kwh per week. At 5p per unit, this involves a cost of £6.55 per week which compares very favourably with the average cost of chemicals for a pool of about £50 per week. The water treatment apparatus according to the invention can therefore provide considerable cost saving over the conventional methods of pool treatment using chemicals.

The invention is not restricted to apparatus for use in the treatment of water for swimming pools but can also be used for treating and purifying water for other uses. For example, the treatment apparatus according to the invention could be installed in an air conditioning system to ensure that viruses such as Legionnaire's disease are killed and it can also be used to kill harmful organisms in water used for feeding plants in hydroponics farming establishments. It should also be noted that the invention is not restricted to the above-described embodiment but modifications and variations may be made to the water treatment apparatus without departing from the scope of the invention. For example, the static mixer 8 and reaction vessel 5 as well as the pH unit 6 may be omitted if desired.

## Claims

1. Apparatus for treating and purifying water which comprises a compressor for compressing ambient air, means for drying the compressed air, an ozone generator for receiving the dried air and subjecting said air to an electrical discharge to form ozone, means for directing said ozone into the path of a flow of water, means for sensing the ozone dissolved in said water and means for controlling the electrical discharge in said ozone generator in response to the level of ozone sensed by the sensing means.

2. Apparatus according to claim 1, wherein further sensing means are provided for sensing the relative humidity of the compressed air after drying and wherein control means are provided for controlling the operation of the drying means in response to signals received from the drying means.

3. Apparatus according to claim 2, wherein the drying means take the form of a cyclic air dryer which comprises a pair of dryer columns connected to the output from the compressor by valve means arranged, in a first position, to allow the passage of air from the compressor to one dryer column while preventing the flow of air to the other dryer column and, in a second position, to allow the passage of air from the compressor to the said other dryer column while preventing the flow of air to the said one dryer column and means for directing compressed air through the said other dryer column in a reverse direction when the valve means are in the first position and through the said one dryer column in a reverse direction when the valve means are in the second position whereby the dryer columns are alternately operative and regenerated during operation of the apparatus.

4. Apparatus according to any preceding claim, wherein the ozone generator comprises a first plate of electrically insulating material, a central plate of electrically conductive material and a second plate of electrically insulating material, the electrically conductive plate being sandwiched between said insulating plates and means being provided for passing a flow of air over the surface of at least one of the plates and further means for subjecting said air flow to electrical discharge to form ozone.

5. Apparatus according to claim 4, wherein the first plate of electrically insulating material is supported on a base plate in which at least one gas inlet and at least one gas outlet are provided.

6. Apparatus according to claim 5, wherein the base plate is made of electrically conductive material and wherein the electrical discharge is arranged to occur between said electrically conductive plate and the base plate.

7. Apparatus according to claim 5 or claim 6, wherein the base plate comprises a substantially rectangular plate made of aluminium or aluminium alloy.

8. Apparatus according to claim 7, wherein the base plate has a raised peripheral edge whereby a well or depression is formed in the central area of said plate.

9. Apparatus according to claim 8, wherein the base plate is provided with a respective trough adjacent each of its shorter ends and wherein the gas inlet comprises a bore leading through the base plate and communicating with one of said troughs and the gas outlet comprises a bore leading through the base plate and communicating with the other of said troughs.

10. Apparatus according to any one of claims 5 to 9, wherein the second plate of electrically insulating material is provided with at least one bore through which is led an electrical connection to the central plate of electrically conductive material.

11. Apparatus according to any one of claims 4 to 10, wherein the first and second plates of electrically insulating material are made of glass.

12. Apparatus according to any preceding claim, said apparatus being adapted for treating the water of a swimming pool or the like and including a pump for recirculating water from the swimming pool through the ozone directing means.

13. Apparatus according to claim 12, wherein the ozone directing means comprise a venturi.

14. Apparatus according to claim 12 or claim 13 and further including a static mixer located downstream of the ozone directing means.

15. Apparatus according to claim 14, wherein the apparatus further includes a reaction vessel downstream of the static mixer for removal of residual ozone before the treated water is returned to the swimming pool or the like.

16. Apparatus according to claim 15, wherein a chlorine/pH unit is provided downstream of the reaction vessel.

17. Apparatus for treating and purifying water substantially as described herein with reference to the drawings.

FIG.1.

0 287 205

FIG.2.

MAINS IN.

0 287 205

0 287 205

FIG.3.

FIG.4.

# FIG.5.

## FIG.6.

## FIG.7.

120
VOLTS

120
VOLTS

10,000
VOLTS

## FIG.8.

WATER
FLOW

WATER
FLOW

FIG.9.

FIG.10.

INDICATOR OVERLOAD

RESET

POWER SUPPLY 201

L
N
E

+

30 VOLTS @10 AMPS.

−

PROTECTION (CUT-OUT CIRCUIT)

203

RL1

RL2

R1

L1

T2

L2

143

H.T.

OZONE CELL

131

DRIVE CIRCUIT 202

1.400Hz ≃

204

TR1

D1

D2

TR2

C1

ZD1

ZD2

D4

D3

R2

R3

C2

0 287 205

**European Patent Office**

| DOCUMENTS CONSIDERED TO BE RELEVANT | | | EP 88301639.6 |
|---|---|---|---|
| Category | Citation of document with indication, where appropriate, of relevant passages | Relevant to claim | CLASSIFICATION OF THE APPLICATION (Int. Cl.4) |
| P,X | US - A - 4 650 573 (NATHANSON)<br>* Column 1, line 63 - column 2, line 53; abstract; fig. 1 * | 1 | C 02 F 1/78<br>C 01 B 13/11 |
| A | US - A - 4 640 782 (BURLESON)<br>* Abstract * | 1 | |
| A | DE - A1 - 3 603 900 (MITSUBISHI DENKI)<br>* Abstract; page 18, lines 7-32 * | 1 | |
| A | DE - A1 - 2 932 346 (BBC AG)<br>* Claim 1 * | 4 | |
| A | DE - A1 - 3 525 708 (NGK SPARK PLUG CO.)<br>* Abstract * | 4 | TECHNICAL FIELDS SEARCHED (Int. Cl.4)<br><br>C 02 F<br>C 01 B |

The present search report has been drawn up for all claims

| Place of search | Date of completion of the search | Examiner |
|---|---|---|
| VIENNA | 13-05-1988 | WILFLINGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82